(19) **Europäisches Patentamt**

**European Patent Office**

**Office européen des brevets**

(11) **EP 0 659 693 B1**

(12) **EUROPÄISCHE PATENTSCHRIFT**

(45) Veröffentlichungstag und Bekanntmachung des Hinweises auf die Patenterteilung:
**13.01.1999 Patentblatt 1999/02**

(51) Int. Cl.[6]: **C02F 1/72**, C02F 9/00, C02F 1/58

(21) Anmeldenummer: **94118376.6**

(22) Anmeldetag: **23.11.1994**

(54) **Verfahren zur Steuerung der Entgiftung cyanidischer Abwässer**

Process for controlling decontamination of waste waters containing cyanides

Procédé pour contrôler le décontamination des eaux usées contenant des cyanures

(84) Benannte Vertragsstaaten:
**DE ES GB SE**

(30) Priorität: **24.12.1993 DE 4344598**

(43) Veröffentlichungstag der Anmeldung:
**28.06.1995 Patentblatt 1995/26**

(73) Patentinhaber: **DEGUSSA AG**
**60311 Frankfurt (DE)**

(72) Erfinder: **Wolf, Hubert**
**D-63546 Hammersbach (DE)**

(56) Entgegenhaltungen:
**EP-A- 0 505 752          EP-A- 0 505 753**
**EP-A- 0 529 332**

**Beschreibung**

Die Erfindung betrifft ein Verfahren zur Steuerung der Entgiftung von Cyanide und/oder labile Cyanokomplexe, insbesondere Zinkcyanokomplexe, enthaltenden wäßrigen Lösungen, insbesondere Abwässern, wobei in einer ersten Stufe freies und aus Cyanokomplexen freigesetztes Cyanid durch Zugabe von Formaldehyd oder einer Formaldehyd freisetzenden Verbindung in Glykonitril überführt wird und in einer zweiten Stufe durch Zugabe einer Quelle für Wasserstoffperoxid Glykonitril durch Perhydrolyse abgebaut wird.

Die Entgiftung cyanidischer Abwässer, wie sie in unterschiedlichen Industriebereichen anfallen, etwa in der Minenindustrie, in Härtereibetrieben und galvanotechnischen Betrieben, unter Verwendung von Persauerstoffverbindungen, wie insbesondere Wasserstoffperoxid und Persulfaten, ist lange bekannt. Um die Reaktionszeit für die Entgiftung zu verkürzen, ist häufig die Mitverwendung von Schwermetallkatalysatoren erforderlich - siehe FR-PS 1 564 915. Nachteilig an der Mitverwendung von Schwermetallkatalysatoren ist, daß diese vielfach vor beendeter Cyanidentgiftung die Zersetzung des Wasserstoffperoxids katalysieren, so daß kein ausreichender Entgiftungsgrad erzielt wird. Ein weiterer Nachteil dieser Methode unter Verwendung von Schwermetallkatalysatoren besteht darin, daß die Rückgewinnung von in dem zu behandelnden Abwasser enthaltenden Wertstoffen in ausreichend reiner Form, etwa die Rückgewinnung von Zink aus Abwässern aus der cyanidischen Verzinkung, verhindert oder erschwert wird.

Nach einem anderen Verfahren wird Wasserstoffperoxid in Kombination mit Formaldehyd zur Entgiftung von cyanidischen Lösungen eingesetzt - US 3,617,582. Die Reaktion verläuft in zwei Stufen, wobei in der ersten Stufe Formaldehyd-Cyanhydrin, das auch als Glykonitril bezeichnet wird, gebildet wird. Bei der zweiten Stufe handelt es sich um eine Perhydrolyse unter Verwendung von Wasserstoffperoxid, wobei Glykonitril zu Glykolsäureamid und Glykolsäure abgebaut wird. Im Verfahren gemäß der genannten US 3,617,582 erfolgt die Entgiftung bei einem pH-Wert im Bereich von 9 bis 12,5. Formaldehyd kann in Form einer wäßrigen Lösung oder einer Formaldehyd freisetzenden Verbindung, wie beispielsweise Paraformaldehyd, eingesetzt werden. Anstelle Wasserstoffperoxid können auch Wasserstoffperoxid freisetzende Verbindungen, wie Perborate oder Percarbonate, zur Perhydrolyse eingesetzt werden. Formaldehyd und Wasserstoffperoxid werden in bestimmten Molverhältnissen, bezogen auf den zuvor bestimmten Gehalt an Cyanid, der zu entgiftenden Lösung, zugesetzt. Eine Anregung zur Steuerung der Entgiftung von Lösungen, deren Cyanidgehalt unbekannt ist, wird in diesem Dokument nicht gegeben; vor der eigentlichen Entgiftung mußte stets der Cyanidgehalt bestimmt werden. Gerade bei Entgiftungsverfahren besteht aber in der Praxis ein Interesse an problemlos steuerbaren Verfahren, welche eine Cyanidbestimmung vor der Entgiftung erübrigen.

Aus der US 4,731,232 ist ein Verfahren zur Reinigung von Cyanide enthaltenden Gaswaschwässern bekannt, das auf der Behandlung des Waschwassers mit Formaldehyd und einem sich daran anschließenden Oxidationsschritt unter Verwendung von Wasserstoffperoxid beruht. In diesem Verfahren erfolgt die Zudosierung von Formaldehyd in Abhängigkeit vom cyanidspezifischen Redoxpotential, das in einem vom Hauptstrom abgezweigten Nebenstrom unter Verwendung einer Edelmetall- und einer Referenzelektrode gemessen wird. Der pH-Wert des Nebenstroms wird wegen der pH-Abhängigkeit des Redoxpotentials auf einen Wert zwischen 7 und 10 eingestellt und konstant gehalten. Zusätzlich werden in den Nebenstrom Silberionen eingebracht. Die Regelung der Zugabe von Wasserstoffperoxid erfolgt widerum in Abhängigkeit von dem gemessenen Redoxpotential. Nachteilig an dem beschriebenen Verfahren ist, daß einer Steuerung der Zugabe der erforderlichen Chemikalien über die gemessenen Redoxpotentiale Grenzen gesetzt sind, weil stets nur ein Mischpotential gemessen wird: Im Falle von Lösungen wechselnder Zusammensetzungen, wie sie insbesondere in galvanotechnischen Betrieben anfallen, ist die genannte Steuerungstechnik daher oft nicht ausreichend, weil es entweder zur Unter- oder Überdosierung von Formaldehyd kommen kann. Damit einhergehen ein gegebenenfalls ungenügender Entgiftungsgrad und/oder ein überhöhter Chemikalienverbrauch.

Aufgabe der vorliegenden Erfindung war somit, das an sich bekannte Verfahren zur Entgiftung cyanidischer Abwässer unter Verwendung von Formaldehyd und Wasserstoffperoxid so zu verbessern, daß die Entgiftung in einfacher und sicherer Weise gesteuert werden kann, so daß bei geringst möglichem Verbrauch an Formaldehyd und Wasserstoffperoxid ein optimales Entgiftungsergebnis erzielt wird.

Gelöst wird die Aufgabe durch ein Verfahren zur Steuerung der Entgiftung von Cyanide und/oder labile Schwermetallcyanokomplexe, insbesondere Zinkcyanokomplexe, enthaltenden wäßrigen Lösungen, insbesondere Abwässern, umfassend die Stufen

(i) kontinuierliche oder periodische Zugabe einer Quelle für Formaldehyd zur zu behandelnden wäßrigen Lösung bei einem pH-Wert im Bereich von 8,5 bis 12, wobei freies und freigesetztes Cyanid in Glykonitril überführt wird, und anschließend
(ii) Perhydrolyse des Glykonitrils durch kontinuierliche oder periodische Zugabe einer Quelle für Wasserstoffperoxid bei einem pH-Wert im Bereich von 8,5 bis 12, wobei das Redoxpotential gemessen und die Zugabe beendet wird, wenn sich bei konstant gehaltenem pH-Wert das Redoxpotential nicht mehr erhöht,

das dadurch gekennzeichnet ist, daß man während der Stufe (i) den pH-Wert durch pH-gesteuerte Zugabe einer Säure im wesentlichen konstant hält und die Formaldehydzugabe beendet, wenn sich hierdurch der pH-Wert nicht mehr erhöht.

Die Steuerung in der Stufe (i) ist aufgrund der Bildungsreaktion von Glykonitril möglich

$$CN^- + H_2CO + H_2O \rightarrow HOCH_2CN + OH^-.$$

Vorzugsweise liegt der pH-Wert in der Stufe (i) als auch in der Stufe (ii) im Bereich von 9 bis 11, insbesondere im Bereich von 9,5 bis 10,5. Unter dem Begriff, wonach der pH-Wert im wesentlichen konstant gehalten wird, ist zu verstehen, daß der pH-Wert maximal um ±0,5 und vorzugsweise weniger als ±0,2 Einheiten vom eingestellten Wert abweicht. Zwecks Zugabe der Säure in der Stufe (i) und der Base in der Stufe (ii) wird üblicherweise eine mit dem jeweiligen Vorratsbehälter verbundene Dosierpumpe oder ein Magnetventil von einem pH-Regler mit einer P- (proportional), PI- (proportional-integral) oder PID- (proportional-integral-differenzial) Charakteristik angesteuert.

In der Stufe (ii) wird in an sich bekannter Weise eine Quelle für Wasserstoffperoxid zudosiert. Während der Oxidation sinkt der pH-Wert ohne Zugabe einer Base ab. Unter Konstanthaltung des pH-Wertes steigt während der Oxidation das Redoxpotential bis zur beendeten Oxidation an. Unter Verwendung einer Ag-Elektrode und Thalamid-Referenzelektrode liegt üblicherweise das maximale Potential meist im Bereich zwischen 650 bis 750 mV.

Das erfindungsgemäße Verfahren eignet sich insbesondere zur Entgiftung von freies Cyanid enthaltenden Abwässern, wie etwa solchen aus Härtereibetrieben, sowie zur Entgiftung von Zinkcyanokomplexe enthaltenden Abwässern, wie sie bei der Verzinkung in galvanotechnischen Betrieben anfallen. Nach der eigentlichen Entgiftung kann Zinkhydroxid bei einem pH-Wert um 9 leicht abgetrennt und der Wiederverwendung zugeführt werden. Auch Cadmiumcyanokomplexe enthaltende Abwässer sind problemlos zu entgiften, da es sich bei diesen Komplexen, wie bei den Zinkcyanokomplexen, um labile Komplexe handelt. In derartigen Abwässern stört die Anwesenheit kleiner Mengen von Cyanokomplexen von Ni, Cu, Ag und Au nicht, vielmehr werden auch diese entgiftet.

Eine zweckmäßige Vorrichtung zur Durchführung des erfindungsgemäßen Verfahrens unter Verwendung einer wäßrigen $H_2O_2$- und wäßrigen $H_2CO$-Lösung als Quelle für $H_2O_2$ bzw. $H_2CO$ umfaßt einen Reaktionsbehälter mit Zu- und Ableitung für das zu behandelnde Wasser, eine Mischvorrichtung, beispielsweise einen Rührer oder eine Kreislaufpumpe, eine pH-Elektrode, eine Redoxelektrode sowie Zuleitungen aus Vorratsbehältern für die wäßrige $H_2CO$- und $H_2O_2$-Lösung sowie die Säure und Base und, soweit erforderlich, einen Aktivator. Die Zuleitungen sind, sofern die Vorratsbehälter oberhalb des Reaktionsbeckens positioniert sind, vorzugsweise mit Regelventilen, beispielsweise Magnetventilen, ausgestattet, welche in Abhängigkeit vom gemessenen pH-Wert und Redoxpotential über einen Steuerschrank angesteuert werden.

Im erfindungsgemäßen Verfahren wird in der ersten Stufe eine Quelle für Formaldehyd, vorzugsweise eine wäßrige Formaldehydlösung oder ein unter den Reaktionsbedingungen depolymerisationsfähiger oligomerer Formaldehyd oder Paraformaldehyd eingesetzt. Bevorzugt werden handelsübliche wäßrige Formaldehydlösungen, welche auch übliche Stabilisatoren, wie beispielsweise Methanol, enthalten können. Während der Zugabe der Quelle für Formaldehyd zu der zu entgiftenden wäßrigen Lösung, etwa einem Abwasser, steigt der pH-Wert an. Um den pH-Wert im wesentlichen konstant halten zu können, muß somit eine Säure, üblicherweise eine Mineralsäure, vorzugsweise Salzsäure oder Schwefelsäure, in äquivalenter Menge zugesetzt werden.

Je nach der Art der gewählten Steuerung - von Hand oder mittels eines pH-Reglers - wird die Säure kontinuierlich, getaktet oder in anderer Weise periodisch zugesetzt. Bei Erreichen des Äquivalenzpunktes - das gesamte freie und unter den gewählten Bedingungen aus den Cyanokomplexen freigesetzte Cyanid liegt in Form von Glykonitril vor - kommt es zu keiner weiteren pH-Änderung, so daß an diesem Punkt die Zufuhr von Formaldehyd als auch die Zufuhr von Säure beendet wird. Anders als das im vorbekannten Verfahren zur Steuerung verwendete Redoxpotenial wird der pH-Wert im erfindungsgemäßen Verfahren in der ersten Stufe nur durch die Glykonitrilbildungsreaktion beeinflußt; eine Über- oder Unterdosierung an Formaldehyd wird auf diese Weise vermieden.

In der zweiten Stufe des erfindungsgemäßen Verfahrens wird eine Quelle für Wasserstoffperoxid, vorzugsweise eine wäßrige Wasserstoffperoxidlösung, zum Zwecke der Perhydrolyse verwendet. Anstelle Wasserstoffperoxid lassen sich jedoch auch andere Persauerstoffverbindungen, welche Wasserstoffperoxid in wäßriger Phase freisetzen, einsetzen: Unter diesen Verbindungen sind Perborate, wie insbesondere Natriumperborat in Form des sogenannten Monohydrats oder Tetrahydrats sowie Natriumpercarbonat ($2\ Na_2CO_3 \cdot 3\ H_2O_2$) hervorzuheben; Perborate können als solche zugesetzt oder in situ aus einer Quelle für Borat, wie Borsäure oder Metaborat, und $H_2O_2$ gebildet werden; auch Erdalkaliperoxide, wie insbesondere Calciumperoxid, welche als solche zugesetzt oder aus Erdalkaliionen und $H_2O_2$ in situ gebildet werden können, sind geeignet. Während Wasserstoffperoxid als wäßrige Lösung beliebiger Konzentration, vorzugsweise handelsüblicher Konzentration mit einem $H_2O_2$-Gehalt zwischen 35 und 70 Gew.-%, eingesetzt wird, können die vorerwähnten Perborate oder Percarbonate in Form einer wäßrigen Lösung oder Suspension oder in Form des festen Salzes zugegeben werden. Vor oder während der Zudosierung der Quelle für Wasserstoffperoxid können auch Stabilisatoren für Wasserstoffperoxid, beispielsweise solche aus der Reihe der Magnesiumsalze, Silikate oder Phosphate in wirksamer Menge dem zu behandelten Abwasser zugegeben werden. Neben der Perhydrolyse von Glykonitril werden durch die Quelle für Wasserstoffperoxid in der zweiten Stufe auch andere oxidierbare Stoffe, welche in dem zu behandelten Abwasser enthalten sind, oxidiert. Um während der Zugabe der Quelle für Wasserstoffperoxid den pH-Wert im wesentlichen konstant zu halten und damit das Ende der Zugabe durch das sich nicht weiter erhöhende Redoxpotential erkennen zu können, wird kontinuierlich, getaktet oder in anderweitig periodischer Weise eine Base zugesetzt. Als Base werden üblicherweise alkalisch reagierende wäßrige Lösungen verwendet; bevorzugt werden Alkalilaugen, insbesondere Natronlauge.

Nach beendeter Entgiftung kann, soweit notwendig nach weiterer Anpassung des pH-Wertes, anwesender Metallhydroxidschlamm abgetrennt und das verbleibende Wasser der Entsorgung - Vorfluter oder biologische Kläranlage - zugeführt werden.

Das erfindungsgemäße Verfahren erlaubt eine sichere Steuerung der Entgiftung von unterschiedlich zusammengesetzten cyanidischen Abwässern in batchweisen oder kontinuierlichen Verfahren. Eine Cyanidbestimmung vor der Entgiftung ist nicht erforderlich. Zur Steuerung der ersten Stufe des Verfahrens reicht eine pH-geregelte Zugabe der Quelle für Formaldehyd und einer Säure aus, um eine Überdosierung der Chemikalien zu vermeiden und nach der Perhydrolyse zu einer einwandfreien Entgiftung zu gelangen.

Störungen, wie sie bei der vorbekannten Steuerung der ersten Stufe des Verfahrens über das Redoxpotential nicht auszuschließen waren, etwa wenn sich die Zusammensetzung des zu behandelnden Abwassers bezüglich seiner Inhaltsstoffe wesentlich geändert hat, treten im erfindungsgemäßen Verfahren nicht auf. Bei der erforderlichen Einsatzmenge an Säure handelt es sich nur um eine Menge, welche der Cyanidmenge äquivalent ist, so daß diese Menge für eine Wirtschaftlichkeitsbetrachtung kaum ins Gewicht fällt. In galvanotechnischen Betrieben, wo das erfindungsgemäße Verfahren besonders vorteilhaft zur Anwendung gelangen kann, sind Vorrichtungen zur pH-Einstellung und Überwachung sowie zur Messung des Redoxpotentials üblicherweise vorhanden. Zur Durchführung des erfindungsgemäßen Verfahrens bedarf es nur der Kombination üblicher Einrichtungen zur Dosierung einer Quelle für Formaldehyd, einer Quelle für Wasserstoffperoxid, einer Säure und einer Base mit einem üblichen pH- und mV-Regler.

## Vergleichsbeispiel

Ein Galvanikabwasser mit einem Gehalt an direkt bestimmbarem Cyanid von 624 mg $CN^-/l$ wurde in bekannter Weise mit einer wäßrigen $H_2O_2$-Lösung (35 Gew.-%) unter potentiometrischer Verfolgung bei einem pH-Wert um 10 und Verwendung eines Aktivators (Aktivator CN der Firma Degussa AG) behandelt. Innerhalb von 24 h konnte der Cyanidgehalt nur auf 123 mg direkt bestimmbares Cyanid pro l bzw. auf 104 mg Gesamt-$CN^-$/l, bestimmt nach DIN 38405, D 13.1 abgesenkt werden. Die zugesetzte Menge $H_2O_2$ betrug das 22-fache der Theorie. Die Zusammensetzung des Galvanikabwassers und der Verlauf der Entgiftung folgen aus der Tabelle 1.

### Tabelle 1

Zusammensetzung des Abwassers vor der Behandlung:

| | |
|---|---|
| direkt argentometrisch bestimmbares Cyanid | 624 mg CN-/l |
| leicht freisetzbares Cyanid, DIN 38405, D 13.2 | 676 mg CN-/l |
| Gesamtcyanid, DIN 38405, D 13.1 | 676 mg CN-/l |
| Kupfer | 1 mg Cu/l |
| Nickel | 6,9 mg Ni/l |
| Zink | 450 mg Zn/l |
| Silber | 0,13 mg Ag/l |
| Eisen | 50 mg Fe/l |
| Chrom | 34 mg Cr/l |
| CSB | 940 mg $O_2$/l |
| pH | 12,4 |

Das Eisen liegt nicht als komplexes Eisencyanid vor, da die D 13.1 und die D 13.2 die gleichen Cyanidwerte ergeben.

Reaktionsablauf: Behandlung von 2000 ml Galvanikabwasser nach Zugabe von 0,2 ml Aktivator CN (Fa. Degussa). $H_2O_2$ wurde kontinuierlich zugegeben.

| Zeit min. | Temp. °C | mV Ag/Thal | pH | ml $H_2O_2$ 35 G-% | ml HCL konz. | ml NaOH 10 G-% | mg $CN^-$/ direkt |
|---|---|---|---|---|---|---|---|
| 0 | 21 | 300 | 12,4 | | | | |
| 10 | 22 | 335 | 10,3 | Start | 4 | | |
| 70 | 23 | 365 | 10,1 | 3 | | | |
| 130 | 23 | 380 | 10,1 | 6 | | | 575 |
| 190 | 23 | 385 | 10 | 9 | | + 3 | |
| 250 | 23 | 380 | 10,4 | 12 | | | 570 |
| 310 | 23 | 385 | 10,3 | 15 | | | |
| 370 | 23 | 390 | 10,2 | 18 | | | 515 |
| 430 | 23 | 400 | 10,15 | 21 | | | |
| 490 | 24 | 410 | 10,1 | 24 | | | |
| 520 | 25 | 415 | 10,1 | 25,5 | | | 475 |
| 580 | 25 | 430 | 10 | 28,5 | | + 5 | |
| 660 | 25 | 415 | 10,4 | 32,7 | | | |
| 24 h | 24 | 515 | 9,85 | 72 | | | 123 |

**Beispiel 1**

Das Galvanikabwasser gemäß Vergleichsbeispiel 1 wurde erfindungsgemäß zunächst mit wäßrigem Formaldehyd (37 Gew.-%) und konzentrierter Salzsäure behandelt, und zwar abwechselnd unter Aufrechterhaltung eines pH-Wertes um 10,3. Anschließend wurden eine 35 gew.-%ige wäßrige Wasserstoffperoxidlösung in kontinuierlicher Weise und 10 gew.-%ige Natronlauge periodisch zudosiert, wobei ein pH-Wert um 10,1 aufrechterhalten wurde. Der Reaktionsverlauf und der Chemikalienverbrauch folgen aus Tabelle 2. In der Tabelle sind auch die Werte für das Redoxpotential in der Stufe (i) und (ii), gemessen mit einer Ag-Elektrode und Thalamid-Bezugselektrode, angegeben.

Die mittels erfindungsgemäßer Steuerung eingesetzte Menge Formaldehyd entsprach 130 % der Theorie, bezogen auf das leicht freisetzbare Cyanid. Nach Zugabe des Wasserstoffperoxids - insgesamt 4,9-fache Menge der Theorie - konnte der Gehalt an leicht freisetzbarem Cyanid (DIN 38405 D 13.2) in 9 h auf 3,8 mg CN-/l abgesenkt werden;

dieser Wert sank nach weiteren 13 h (End-pH-Wert 9,85) ohne Chemikalienzugabe auf 2,1 mg CN-/l.

Tabelle 2

200 ml Galvanikabwasser + 0,2 ml Aktivator CN; periodische Zugabe von HCl, $H_2CO$ und NaOH; kontinuierliche Zugabe von $H_2O_2$.

Reaktionsablauf:

| Zeit min. | Temp. °C | mV Ag/Thal | pH | ml $H_2O_2$ 35 G-% | ml HCL konz. | ml $H_2CO$ 37 G-% | mg $CN^-$/ direkt |
|---|---|---|---|---|---|---|---|
| 0 | 21 | 290 | 12,3 | | + 4,0 | | |
| 2 | 21 | 330 | 10,4 | | | + 1 | |
| 4 | 21 | 360 | 11,0 | | + 0,7 | | |
| 6 | 21 | 390 | 10,3 | | | + 1 | |
| 8 | 22 | 390 | 10,8 | | + 0,7 | | |
| 10 | 22 | 420 | 10,2 | | | + 1 | |
| 12 | 22 | 420 | 10,6 | | + 0,4 | | |
| 14 | 22 | 435 | 10,3 | | | + 1 | |
| 16 | 22 | 440 | 10,6 | | + 0,4 | | |
| 18 | 22 | 460 | 10,3 | | | + 1 | |
| 20 | 22 | 470 | 10,3 | | | | |
| | | | | kont. Zugabe: | | ml NaOH 10 G-% | |
| 30 | 23 | 475 | 10,3 | Start | | | |
| 60 | 23 | 610 | 9,7 | 3,0 | | + 4 | |
| 61 | 23 | 580 | 10,4 | | | | |
| 75 | 23 | 605 | 9,8 | 4,5 | | + 3 | |
| 76 | 23 | 585 | 10,4 | | | | |
| 90 | 24 | 610 | 9,7 | 6,0 | | + 4 | |
| 91 | 24 | 585 | 10,4 | | | | |

| 105 | 24 | 610 | 9,9 | 7,5 | | + 3 | |
|---|---|---|---|---|---|---|---|
| 106 | 24 | 590 | 10,4 | | | | |
| 120 | 24 | 605 | 10,0 | 9,0 | | + 1,5 | |
| 121 | 24 | 595 | 10,4 | | | | |
| 150 | 24 | 600 | 9,9 | 12,0 | | + 2 | |
| 151 | 24 | 585 | 10,3 | | | | |
| 180 | 24 | 580 | 10,0 | 13,5 | | + 1,5 | |
| 181 | 24 | 560 | 10,4 | | | | |
| 270 | 24 | 535 | 10,15 | 18,0 | | | 67 |
| 360 | 24 | 540 | 10,05 | 19,5 | | + 2 | |
| 390 | 24 | 525 | 10,3 | 20,0 | | | 33 |
| 480 | 24 | 555 | 10,15 | 21,5 | | | |
| 500 | 24 | 650 | 10,1 | 21,8 | | | |
| 505 | 24 | 690 | 10,1 | 21,8 | | | |
| 510 | 24 | 740 | 10,1 | | | | |
| 540 | 24 | 730 | 10,1 | | | | |
| 1440 | 21 | 710 | 9,85 | | | | |

pro l Abwasser wurden folgende Chemikalienmengen benötigt:

$H_2O_2$ 35 G-%        10,9 ml

$H_2CO$ 37 G-%         2,5 ml

Aktivator CN        0,1 ml

HCl konz.           3,1 ml

NaOH 10 G-%         10,5 ml

**Beispiel 2**

2 l des Abwassers gemäß Vergleichsbeispiel wurden erfindungsgemäß behandelt. Der Verlauf der Reaktion und Verbrauchszahlen folgen aus Tabelle 3.

Der wesentliche Unterschied zu Beispiel 1 besteht darin, daß die $H_2O_2$-Lösung nicht kontinuierlich, sondern batchweise zugegeben wurde. Hierdurch konnten das leicht freisetzbare Cyanid innerhalb von 7,5 h in der unfiltrierten Probe auf 0,65 mg CN-/l abgesenkt werden. Der Verbrauch an Formaldehyd entspricht 130 % der Theorie, derjenige an Wasserstoffperoxid 490 % der Theorie. Restcyanid (leicht freisetzbar) nach 24 h in der unfiltrierten Probe 0,33 mg CN-/l;

leicht freisetzbarer CN-Gehalt im behandelten Abwasser nach der Filtration 0,15 mg CN-/l. Der Gesamtcyanidgehalt nach DIN 38405 D 13.1 betrug nach 24 h 12,3 mg CN-/l.

Tabelle 3

2000 ml Galvanikabwasser

0,2 ml Aktivator CN

Reaktionsablauf:

| Zeit min. | Temp. °C | mV Ag/Thal | pH | ml $H_2O_2$ 35 G-% | ml HCL konz. | ml $H_2CO$ 37 G-% | mg $CN^-$/ direkt |
|---|---|---|---|---|---|---|---|
| 0 | 25 | 300 | 12,2 | | + 3,6 | | |
| 2 | 25 | 380 | 10,2 | | | + 1 | |
| 4 | 25 | 420 | 10,9 | | + 0,5 | | |
| 6 | 25 | 450 | 10,4 | | | + 1 | |
| 8 | 25 | 450 | 10,8 | | + 0,5 | | |
| 10 | 25 | 470 | 10,4 | | | + 1 | |
| 12 | 25 | 470 | 10,75 | | + 0,5 | | |

| | | | | | | ml NaOH 10 G-% | |
|---|---|---|---|---|---|---|---|
| 14 | 25 | 495 | 10,35 | | | + 1 | |
| 16 | 25 | 500 | 10,6 | | + 0,3 | | |
| 18 | 25 | 510 | 10,35 | | | + 1 | |
| 20 | 25 | 510 | 10,35 | | | | |
| 30 | 25 | 510 | 10,35 | + 4 | | | |
| 35 | 25 | 610 | 9,9 | | | + 5 | |
| 36 | 26 | 600 | 10,45 | | | | |
| 60 | 26 | 635 | 9,7 | | | + 4 | |
| 90 | 26 | 600 | 10,45 | + 4 | | | |
| 91 | 27 | 605 | 9,9 | | | + 4 | |
| 120 | 27 | 630 | 9,85 | | | + 3 | |
| 150 | 27 | 610 | 10,3 | + 4 | | | |
| 170 | 27 | 615 | 9,85 | | | + 3 | |
| 210 | 27 | 565 | 10,25 | + 4 | | | 73 |
| 270 | 27 | 560 | 10,0 | + 2 | | | 52 |
| 330 | 27 | 565 | 9,95 | + 2 | | | 31 |
| 350 | 27 | 570 | 9,85 | | | + 3 | |
| 390 | 28 | 550 | 10,4 | + 2 | | | 10 |
| 410 | 28 | 730 | 10,3 | | | | |
| 420 | 28 | 720 | 10,25 | | | | |
| 450 | 28 | 720 | 10,2 | | | | |

pro l Abwasser wurden folgende Chemikalienmengen benötigt:

$H_2O_2$ 35 G-%          11,0 ml

$H_2CO$ 37 G-%           2,5 ml

Aktivator CN            0,1 ml

```
HCl konz.                          2,7 ml
NaOH 10 G-%                        11,0 ml
```

**Beispiel 3**

Ein Galvanikabwasser der Zusammensetzung gemäß Tabelle 4 wurde erfindungsgemäß entgiftet. Der Reaktionsverlauf, der Chemikalienverbrauch und die Ergebnisse folgen aus Tabelle 4. Nach 6,75 h wurde der Gehalt an leicht freisetzbarem Cyanid von 1260 mg CN-/l auf 2,3 mg CN-/l abgesenkt, wobei der $H_2O_2$-Verbrauch das 1,8-fache der Theorie betrug.

Tabelle 4

Zusammensetzung des Abwassers vor der Behandlung:

```
direkt argentometrisch bestimmbares
Cyanid                                      1270 mg CN-/l
leicht freisetzbares Cyanid,
DIN 38405, D 13.2                           1260 mg CN-/l
Gesamtcyanid, DIN 38405, D 13.1             1410 mg CN-/l
Kupfer                                       1,8 mg Cu/l
Nickel                                      <0,5 mg Ni/l
Zink                                        1100 mg Zn/l
Silber                                      <0,5 mg Ag/l
Eisen                                         18 mg Fe/l
Chrom                                       <0,5 mg Cr/l
pH                                          12,9
```

Reaktionsablauf: 4000 ml Galvanikabwasser nach Zugabe von 0,4 ml Aktivator CN

| Zeit min. | Temp. °C | mV Ag/Thal | pH | ml $H_2O_2$ 50 G-% | ml HCL konz. | ml $H_2CO$ 37 G-% | mg CN-/l direkt | Oa *) mg/l |
|---|---|---|---|---|---|---|---|---|
| 0 | 24 | 200 | 12,9 | | | | | |
| 5 | 27 | 360 | 10,1 | | 60 | | | |
| 6 | 27 | 360 | 10,0 | | | + 2 | | |
| 8 | 27 | 360 | 10,3 | | + 2 | | | |
| 10 | 27 | 370 | 10,0 | | | + 2 | | |
| 12 | 27 | 370 | 10,2 | | + 2 | | | |
| 14 | 27 | 380 | 9,9 | | | + 2 | | |
| 16 | 27 | 380 | 10,05 | | + 1 | | | |
| 18 | 27 | 385 | 9,95 | | | + 2 | | |
| 20 | 27 | 385 | 10,1 | | + 1 | | | |
| 22 | 27 | 390 | 9,9 | | | + 2 | | |
| 24 | 27 | 390 | 10,1 | | + 1 | | | |
| 26 | 27 | 395 | 9,95 | | | + 2 | | |
| 28 | 27 | 395 | 10,1 | | + 1 | | | |
| 30 | 27 | 400 | 10,0 | | | + 2 | | |
| 32 | 27 | 405 | 10,1 | | + 1 | | | |
| 34 | 27 | 415 | 10,0 | | | + 2 | | |
| 36 | 27 | 430 | 10,05 | | + 1 | | | |
| 38 | 27 | 440 | 9,9 | | | + 2 | | |
| 40 | 27 | 470 | 9,9 | | | ml NaOH 10 G-% | | |
| 45 | 27 | 470 | 9,9 | + 4 | | | | |
| 60 | 28 | 500 | 9,5 | | | + 30 | | |
| 62 | 28 | 460 | 10,0 | | | | | >25 |
| 75 | 28 | 460 | 10,0 | | | | | >25 |
| 105 | 29 | 460 | 9,9 | + 4 | | | 842 | |

11

| | | | | | | | | |
|---|---|---|---|---|---|---|---|---|
| 110 | 29 | 480 | 9,7 | | | + 20 | | |
| 112 | 29 | 455 | 10,0 | | | | | |
| 130 | 30 | 490 | 9,6 | | | + 20 | | |
| 132 | 30 | 470 | 10,0 | | | | | |
| 165 | 30 | 475 | 9,9 | + 4 | | | 525 | |
| 175 | 30 | 520 | 9,5 | | | + 20 | | >25 |
| 177 | 30 | 480 | 10,0 | | | | | |
| 195 | 30 | 510 | 9,6 | | | + 20 | | |
| 197 | 30 | 480 | 10,0 | | | | | |
| 225 | 30 | 485 | 9,8 | + 4 | | | 254 | |
| 230 | 30 | 580 | 9,6 | | | + 20 | | |
| 235 | 30 | 500 | 10,0 | | | | | |
| 250 | 30 | 540 | 9,6 | | | + 20 | | >25 |
| 255 | 30 | 510 | 10,0 | | | | | |
| 285 | 30 | 510 | 9,8 | + 4 | | | 83 | |
| 290 | 30 | 670 | 9,6 | | | + 20 | | |
| 295 | 30 | 650 | 10,0 | | | | | >25 |
| 315 | 30 | 700 | 9,9 | | | | < 3 | |
| 345 | 30 | 700 | 9,8 • | | | | | >25 |

*) Die Oa-Bestimmung erfolgte mit $H_2O_2$-Teststäbchen.

Ergebnis:

```
leicht freisetzbares Cyanid,
DIN 38405 D 13.2 (unfiltriert)          2,3 mg CN-/l
leicht freisetzbares Cyanid,
DIN 38404 D 13.2 (filtriert)            2,2 mg CN-/l
Gesamtcyanid, DIN 38405 D 13.1          146,0 mg CN-/l
leicht freisetzbares Cyanid
nach 20 h, DIN 38405 D 13.2
(unfiltriert)                           1,3 mg CN-/l
```

Chemikalienverbrauch pro l Abwasser

```
H2O2 50 G-%          5,0 ml
H2CO 37 G-%          4,5 ml
Aktivator CN         0,1 ml
HCl konz.            17,5 ml
NaOH 10 G-%          42,5 ml
```

**Patentansprüche**

1. Verfahren zur Steuerung der Entgiftung von Cyanide und/oder labile Schwermetallcyanokomplexe, insbesondere Zinkcyanokomplexe, enthaltenden wäßrigen Lösungen, insbesondere Abwässern, umfassend die Stufen

   (i) kontinuierliche oder periodische Zugabe einer Quelle für Formaldehyd zur zu behandelnden wäßrigen Lösung bei einem pH-Wert im Bereich von 8,5 bis 12, wobei freies und freigesetztes Cyanid in Glykonitril überführt wird, und anschließend
   (ii) Perhydrolyse des Glykonitrils durch kontinuierliche oder periodische Zugabe einer Quelle für Wasserstoffperoxid bei einem pH-Wert im Bereich von 8,5 bis 12, wobei das Redoxpotential gemessen und die Zugabe beendet wird, wenn sich bei konstant gehaltenem pH-Wert das Redoxpotential nicht mehr erhöht,

   dadurch gekennzeichnet,
   daß man während der Stufe (i) den pH-Wert durch pH-gesteuerte Zugabe einer Säure im wesentlichen konstant hält und die Formaldehydzugabe beendet, wenn sich hierdurch der pH-Wert nicht mehr erhöht.

2. Verfahren nach Anspruch 1,
   dadurch gekennzeichnet,
   daß man in den Stufen (i) und (ii) einen pH-Wert im Bereich von 9,5 bis 10,5 einstellt und konstant hält.

3. Verfahren nach Anspruch 1 oder 2,
   dadurch gekennzeichnet,
   daß man die pH-Regelung unter Verwendung von P-, PI- oder PID-Reglern vornimmt.

**Claims**

1. Process for controlling the decontamination of aqueous solutions, in particular waste water, containing cyanides and/or labile heavy metal cyanocomplexes, in particular zinc cyanocomplexes, comprising the steps

(i) continuous or periodic addition of a source of formaldehyde to the aqueous solution to be treated at a pH value in the range of 8.5 to 12, during which free and liberated cyanide is converted into glyconitrile, and then
(ii) perhydrolysis of the glyconitrile by continuous or periodic addition of a source of hydrogen peroxide at a pH value in the range of 8.5 to 12, the redox potential being measured and the addition terminated when, with the pH value maintained constant, the redox potential no longer increases,

characterised in that
during step (i) the pH value is maintained substantially constant by pH-controlled addition of an acid and the addition of formaldehyde is terminated when the pH value is no longer raised thereby.

2. Process according to claim 1,
characterised in that
in steps (i) and (ii) the pH value is adjusted to, and maintained constant, within the range of 9.5 to 10.5.

3. Process according to claim 1 or 2,
characterised in that
the pH control is effected with the use of P-, PI- or PID-controllers.

**Revendications**

1. Procédé de réglage de la décontamination de solutions aqueuses contenant des cyanures et/ou des complexes labiles cyano-métal lourd, en particulier des complexes de cyano-zinc, en particulier des eaux usées comprenant les étapes :

(i) addition continue ou périodique d'une source de formaldéhyde à la solution aqueuse à traiter dans un intervalle de pH compris entre 8,5 et 12, le cyanure libre et libéré étant transformé en glyconitrile, puis
(ii) perhydrolyse du glyconitrile par addition continue ou périodique d'une source de peroxyde d'hydrogène à pH compris entre 8,5 et 12, le potentiel Redox étant mesuré et l'addition étant terminée lorsque à pH maintenu constant le potentiel Redox ne s'élève plus,

caractérisé en ce que

• pendant l'étape (i) on maintient le pH essentiellement constant par addition commandée du pH d'un acide et
• on arrête l'addition de formaldéhyde lorsqu'ainsi le pH ne s'élève plus.

2. Procédé selon la revendication 1,
caractérisé en ce que
dans les étapes (i) et (ii) on règle et on maintient constant un pH entre 9,5 et 10,5.

3. Procédé selon la revendication 1 ou 2,
caractérisé en ce qu'
on procède au réglage du pH en utilisant des régulateurs de P, PI ou PID.